(19) Europäisches Patentamt
European Patent Office
Office européen des brevets

(11) **EP 2 177 877 A1**

(12) **EUROPÄISCHE PATENTANMELDUNG**

(43) Veröffentlichungstag:
**21.04.2010 Patentblatt 2010/16**

(51) Int Cl.:
***G01C 21/36*** *(2006.01)* ***G08G 1/0968*** *(2006.01)*

(21) Anmeldenummer: **09168067.8**

(22) Anmeldetag: **18.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **16.10.2008 DE 102008042880**

(71) Anmelder: **Robert Bosch GmbH**
**70442 Stuttgart (DE)**

(72) Erfinder:
• **Bruns, Jochen**
**31832 Springe (DE)**
• **Mueller, Guido**
**06484 Quedlinburg (DE)**

(54) **Verfahren und System für Navigationseingaben**

(57) Ein Verfahren zum Eingeben einer vorbestimmten Ortsangabe in ein Navigationsgerät umfasst die Schritte des Erfassens wenigstens eines eingegebenen Zeichens, des Auswählens wenigstens einer Ortsangabe aus einer Vielzahl von Ortsangaben auf der Basis der eingegebenen Zeichen, des Darstellens der ausgewählten Ortsangaben und des Selektierens der vorbestimmten Ortsangabe unter den dargestellten Ortsangaben, wobei das Auswählen zusätzlich auf der Basis einer navigatorischen Relevanz der den Ortsangaben zugeordneten Orten erfolgt.

**Nach 1. Buchstaben**

| Wismar | |
| Wismar - Klein | |
| Wispelt | |
| Wispenstein | |

**Fig. 4a**

**Nach 2. Buchstaben**

| Wismar | |
| Wismar - Klein | |
| Wispelt | |
| Wispenstein | |

**Fig. 4b**

**Nach 3. Buchstaben**

| Wiesbaden | |
| Wiesbaum | |
| Wiesbichl | |
| Wiesbühl | |

**Fig. 4c**

**Fig. 4**

EP 2 177 877 A1

**Beschreibung**

Die Erfindung betrifft ein Navigationsgerät. Insbesondere betrifft die Erfindung ein Verfahren zur Eingabe einer Ortsangabe in ein Navigationsgerät.

Navigationsgeräte führen einen Benutzer üblicherweise von einem gegenwärtigen Aufenthaltsort über ein Wegenetz zu einem ausgewählten Zielort. Um einem Benutzer des Navigationsgeräts eine Eingabe eines Zielortes zu ermöglichen, sind unterschiedliche Bedienkonzepte bekannt. Beispielsweise kann der Zielort aus einem internen oder externen Zielspeicher selektiert oder als Koordinate definiert werden, oder er wird menügeführt aus einem Index möglicher Städte, Straßen oder Sonderziele ausgewählt.

In einer verbreiteten Variante wird nach dem Eingeben eines oder mehrerer Zeichen durch einen Benutzer aus einer Vielzahl abgespeicherter Ortsangaben eine alphabetisch sortierte Liste derjenigen Ortsangaben auf einer Anzeigeeinheit des Navigationsgeräts angezeigt, die mit den bislang eingegebenen Zeichen beginnen. Befindet sich die Ortsangabe, die der Benutzer eingeben möchte, in der Liste, so kann er sie durch Auswählen übernehmen und die Eingabe der Ortsangabe damit abschließen.

Eine solche Eingabe erfordert unter Umständen eine intensive Interaktion mit dem Gerät. Ist der Benutzer des Navigationsgeräts ein Fahrer eines Kraftfahrzeugs, so besteht die Gefahr, dass eine Eingabe während einer Fahrt seine Aufmerksamkeit gegenüber dem Straßenverkehr beeinträchtigt.

Es ist daher Aufgabe der Erfindung, eine Technik bereitzustellen, mittels derer eine Eingabe einer Ortsangabe in einem Navigationsgerät effizienter gestaltet werden kann.

Die Aufgabe wird durch ein Verfahren nach Anspruch 1, ein Computerprogrammprodukt nach Anspruch 8, eine Vorrichtung nach Anspruch 8 und ein System nach Anspruch 9 gelöst. Unteransprüche geben zweckmäßige bzw. vorteilhafte Ausgestaltungen an.

Erfindungsgemäß gibt ein Benutzer eines Navigationsgeräts eines oder mehrere Zeichen einer Ortsangabe, die einen anzusteuernden Zielort repräsentiert, in das Navigationsgerät ein. Aus einer Vielzahl gespeicherter Ortsangaben wählt das Navigationssystem eine oder mehrere aus, die zwei Kriterien genügen. Einerseits beinhalten die ausgewählten Ortsangaben die eingegebenen Zeichen, beispielsweise als Anfangszeichen. In alternativen Ausführungen kann auch lediglich eine Ähnlichkeit, auch phonetischer Natur, der ausgewählten Ortsangaben mit den eingegebenen Zeichen vorliegen. Andererseits ist eine navigatorische Relevanz der den ausgewählten Ortsnamen zugeordneten Orte beispielsweise maximal. Die ausgewählten Ortsangaben werden dann vom Navigationssystem für den Benutzer dargestellt, wobei die Ortsangaben alphabetisch oder nach navigatorischer Relevanz sortiert sein können. Befindet sich die vorbestimmte Ortsangabe unter den dargestellten, kann sie durch einen Benutzer selektiert werden. Andernfalls kann der Benutzer weitere Zeichen der vorbestimmten Ortsangabe eingeben, damit in einem erneuten Durchgang des Verfahrens besser passende Ortsangaben angezeigt werden.

Eine Ortsangabe kann dabei ein beliebiger Teil einer Benennung eines Ortes sein, beispielsweise ein Länder-, Straßen- oder Ortsname, eine Kategorie, eine Postleitzahl, eine Hausnummer oder eine namentliche Bezeichnung des Ortes.

Die navigatorische Relevanz ist ein Maß dafür, welche Bedeutung eine Ortsangabe bezüglich einer Verwendung im Rahmen des Navigationssystems, also beispielsweise als Zielpunkt, hat. Die navigatorische Relevanz kann auf der Basis einer Verkehrsbedeutung des Ortes bestimmt werden, der der Ortsangabe zugeordnet ist. Diese Bedeutung kann beispielsweise durch eine Einwohner- bzw. Anwohnerzahl, durch eine politische, kulturelle, historische oder gesellschaftliche Bedeutung des Ortes oder einer Kombination daraus begründet sein. Alternativ oder zusätzlich dazu kann die Verkehrsbedeutung des Ortes durch eine verkehrstechnische Erreichbarkeit begründet sein, etwa in Form einer Anzahl und/oder Kapazität von zu diesem Ort führenden Wegen.

In einer weiteren Ausgestaltung kann die navigatorische Relevanz auch davon abhängig sein, in welcher Lage ein der Ortsangabe zugeordneter Ort bezüglich einer aktuellen Position des Navigationsgeräts liegt. Näher liegende Orte können beispielsweise navigatorisch relevanter sein als weiter entfernte Orte. Eine Abstandsbestimmung des Ortes kann beispielsweise daran orientiert sein, wie lange eine Reise zu dem jeweiligen Ort voraussichtlich dauert, wie lang der tatsächlich zurückzulegende Weg und/oder wie groß die Luftlinienentfernung ist.

Die navigatorische Relevanz kann auch auf der Basis einer vorausgehenden Verwendung der Ortsangabe im Rahmen des Navigationssystems erfolgen, wobei auch ein zeitlicher Verlauf einer Verwendungshäufigkeit berücksichtigt werden kann. Beispielsweise kann eine Ortsangabe durch häufiges Verwenden eine höhere navigatorische Relevanz erlangen, diese aber teilweise oder vollständig wieder verlieren, wenn die Ortsangabe über längere Zeit hinweg nicht verwendet wird.

In noch einer weiteren Ausgestaltung kann eine durch häufige Verwendung erhöhte navigatorische Relevanz einer ersten Orts-angabe sich erhöhend auf eine navigatorische Relevanz einer zweiten Ortsangabe auswirken, die mit der ersten Ortsangabe in Beziehung steht, beispielsweise in Form einer räumlichen Nähe. Die Beziehung kann auch in Form einer ähnlichen Einteilung in Kategorien der entsprechenden Orte bestehen, wobei Kategorien beispielsweise Gastlichkeit, Sport, und Kultur umfassen können. Werden beispielsweise häufig Ortsangaben der Kategorie Sport verwendet, so können alle Ortsangaben dieser Kategorie eine erhöhte navigatorische Relevanz erlangen.

Schließlich kann die navigatorische Relevanz einer Ortsangabe auch auf der Basis einer Kombination mehrerer der genannten Sachverhalte bestimmt werden, wobei die unterschiedlichen Sachverhalte unterschiedlich gewichtet werden können.

Kurze Beschreibung der Zeichnungen

Weitere Vorzüge und Ausgestaltungen der Erfindung werden nun mit Bezug auf die beigefügten Figuren erläutert, in denen

Fig. 1 ein Navigationsgerät zeigt;

Fig. 2 ein Ablaufdiagramm eines Verfahrens zur Eingabe einer Ortsangabe in das Navigationsgerät von Fig. 1 zeigt;

Fig. 3 unterschiedliche Stadien einer Eingabe einer Ortsangabe in ein Navigationsgerät zeigt;

Fig. 4 unterschiedliche Stadien einer Eingabe einer exemplarischen Ortsangabe entsprechend Fig. 3 zeigt;

Fig. 5 unterschiedliche Stadien einer weiteren Eingabe einer exemplarischen Ortsangabe entsprechend Fig. 3 zeigt.

Ausführungsformen der Erfindung

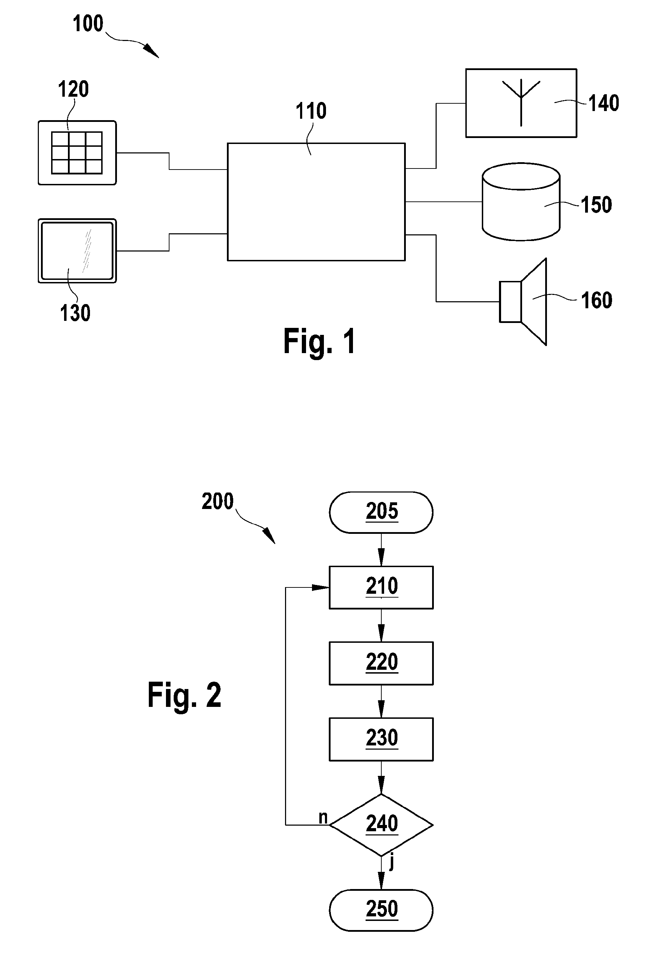

Fig. 1 zeigt ein Navigationsgerät 100, das eine Verarbeitungseinheit 110 eine Eingabeeinheit 120, eine Anzeigeeinheit 130, eine Positionsbestimmungseinheit 140, eine Datenbank 150 und eine akustischen Ausgabeeinheit 160 umfasst. Alle Komponenten sind mit der Verarbeitungseinheit 110 verbunden. Die Eingabeeinheit 120 kann beispielsweise eine Tastatur oder eine "virtuelle", Tastatur sein, die auf der als Touch-Screen ausgebildeten Anzeigeeinheit 130 dargestellt ist. Die Positionsbestimmungseinheit 140 kann beispielsweise auf einem GPS-GLONASS- oder Galileo-Empfänger basieren und bestimmt eine aktuelle Position des Navigationsgeräts 100. Die Datenbank 150 umfasst Informationen über eine Vielzahl von Ortsangaben und diesen zugeordneten Informationen, wie beispielsweise eine Kategorie, eine absolute Verkehrsbedeutung sowie einen Verlauf einer Verwendung durch den Benutzer. Die akustische Ausgabeeinheit 160 wird bei einer Zielführung des Navigationsgeräts zur Ausgabe von Fahranweisungen verwendet.

Fig. 2 zeigt eine schematische Darstellung eines Verfahrens 200 zur Eingabe ener Ortsangabe in ein Navigationsgerät 100 nach Fig. 1. Das Verfahren 200 beginnt in einem Schritt 205. In einem folgenden Schritt 210 werden mittels der Eingabeeinheit 120 eines oder mehrere Zeichen eingegeben. Anschließend werden auf der Basis der eingegebenen Zeichen in einem Schritt 220 eine oder mehrere in einer Datenbank 150 gespeicherte Ortsangaben ausgewählt und in einem folgenden Schritt 230 auf der Anzeigeeinheit 130 dargestellt. In einem folgenden Schritt 240 kann eine der dargestellten Ortsangaben ausgewählt werden; in diesem Fall endet das Verfahren im Schritt 250 mit der ausgewählten Ortsangabe als Ergebnis. Andernfalls kehrt das Verfahren zum Schritt 210 zurück, und es können zusätzliche Zeichen eingegeben werden.

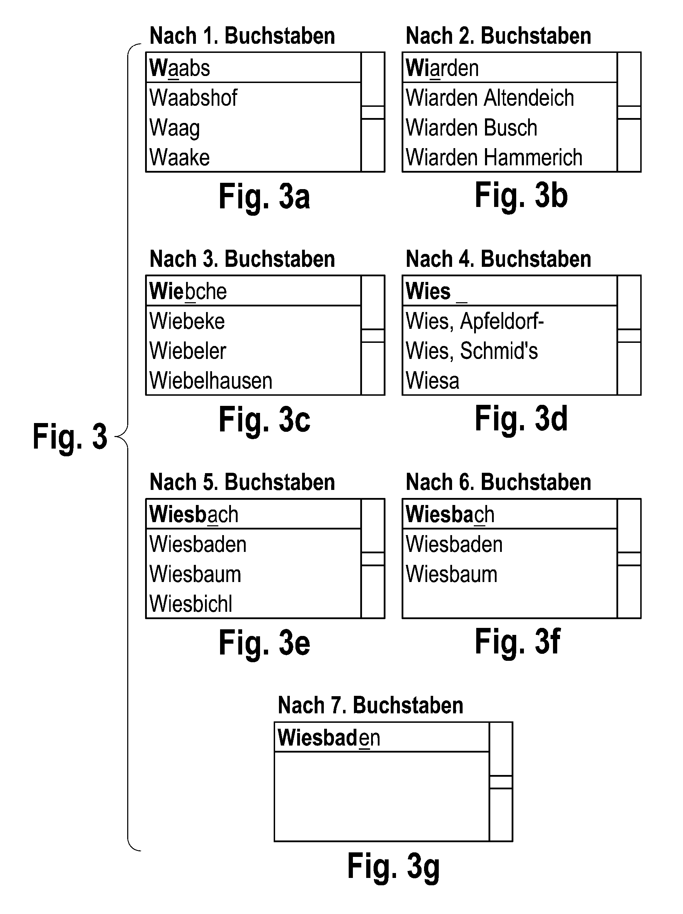

Fig. 3 zeigt in den Unterfiguren 3A bis 3G unterschiedliche Stadien einer Eingabe der vorbestimmten Ortsangabe "Wiesbaden" in ein herkömmliches Navigationsgerät. In jeder der Unterfiguren der Fign. 3 bis 5 ist eine alphabetisch aufsteigend sortierte Liste derjenigen Ortsnamen angefügt, die mit den eingegebenen Zeichen beginnen. Die eingegebenen Zeichen sind in jeder Unterfigur in der obersten Zeile, die durch eine horizontale Linie von den anderen Zeilen abgetrennt ist, in Fettdruck dargestellt.

In Fig. 3A ist lediglich das einzige Zeichen "W" eingegeben, in Fig. 3B die zwei Zeichen "Wi" und so fort, bis in Fig. 3G die sieben Zeichen "Wiesbad" eingegeben sind. Die vorbestimmte Ortsangabe "Wiesbaden" ist erst nach Eingabe des fünften Zeichens in Fig. 3C dargestellt und kann erst dann selektiert werden. Als oberster Eintrag der Liste erscheint "Wiesbaden" erst nach Eingabe von sieben Zeichen in Fig. 3G.

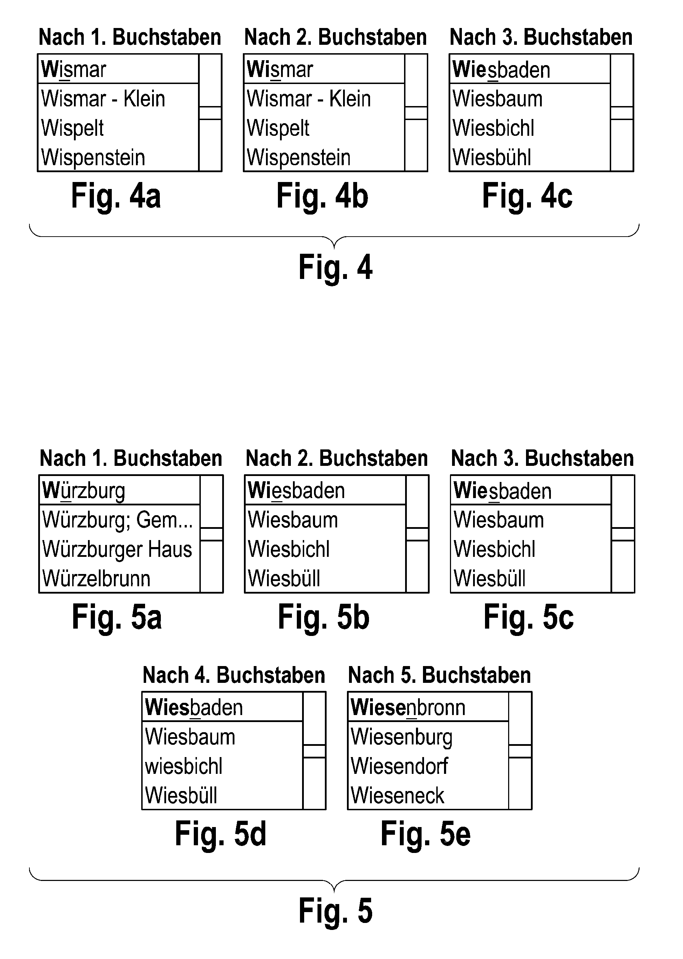

Fig. 4 zeigt drei unterschiedliche Stadien 4A bis 4C entsprechend der Darstellung von Fig. 3 bei Verwendung einer ersten beispielhaften Ausführungsform der Erfindung. Die Liste der dargestellten Ortsangaben ist nach navigatorischer Relevanz von oben nach unten absteigend sortiert. In dieser Ausführungsform wird die navigatorische Relevanz G1 folgendermaßen bestimmt:

$$G_1 = \frac{1}{D} \max\left(B_{al\lg emein}, B_{individuell}\right),$$

wobei Ballgemein eine allgemeine Verkehrsbedeutung und Bindividuell eine individuelle Verkehrsbedeutung bezeichnet. D ist die Entfernung zwischen der aktuellen Position und dem vorbestimmten Ort.

Sind, z.B. bei einem neuen Gerät, bislang noch keine Ortsangaben verwendet worden, ist die individuelle Verkehrsbedeutung für jede Ortsangabe null. Somit zählen nur die absolute Verkehrsbedeutung Ballgmein und die Entfernung D für die Bestimmung der navigatorischen Relevanz G1. Je nach aktueller Position ergibt sich eine unterschiedliche Auswahl von dargestellten Ortsbezeichnungen. In Fig. 4 liegt die aktuelle Position in unmittelbarer Nähe der Stadt "Wismar", weshalb in den Unterfiguren 4A und 4B zunächst diese Stadt als navigatorisch relevanteste Ortsangabe (oberster Listeneintrag) dargestellt ist. Der Eintrag "Wiesbaden" erscheint als relevanteste Ortsangabe jedoch bereits nach Eingabe des dritten Zeichens in Fig. 4C. Obwohl durch den geringen geometrischen Abstand zu einem Ort, dessen Ortsangabe mit den gleichen zwei Zeichen beginnt wie die vorbestimmte Ortsangabe, unvorteilhafte Ausgangsbedingungen vorliegen, kann die vorbestimmte Ortsangabe erfindungsgemäß deutlich zügiger als mit dem konventionellen Verfahren nach Fig. 3 eingegeben werden. Bei dem Verfahren nach dem ersten Ausführungsbeispiel genügt eine Eingabe von lediglich drei Zeichen, während bei dem konventionellen Verfahren nach Fig. 3 sieben eingegebene Zeichen erforderlich sind.

Fig. 5 zeigt vier unterschiedliche Stadien einer Eingabe der Ortsangabe "Wiesenbronn" (in der Nähe von Würzburg) in das Navigationsgerät, das der in Fig. 4 gezeigten Eingabe zugrunde liegt. Auf den ersten Blick scheinen kleinere Ortschaften bei dem erfindungsgemäßen Verfahren einen höheren Aufwand bei der Eingabe der Ortsangabe zu erfordern, da die absolute Verkehrsbedeutung dieser Ortschaften geringer ist. Aufgrund der Berücksichtigung auch der Entfernung D des Ortes von der aktuellen Position bei der Bestimmung der navigatorischen Relevanz kann sich jedoch auch hier ein relativ schneller Treffer ergeben. Im vorliegenden Beispiel wird für eine Eingabe der Ortsangabe "Wiesenbronn" bereits nach Eingabe des fünften Zeichens der passende Eintrag als bester Treffer angezeigt, während nach dem konventionellen Verfahren von Fig. 3 erst nach Eingabe des achten Zeichens ein Treffer gefunden werden konnte (nicht dargestellt).

Die Ergebnisse der Fign. 4 und 5 gelten ohne die Berücksichtigung der individuellen Verkehrsbedeutungen Bindividuell. Befindet sich die aktuelle Position weit entfernt vom Ort "Wiesenbronn", müssten mindestens acht Zeichen eingegeben werden, um die entsprechende Ortsangabe in der dargestellten Liste zu finden. Aufgrund der individuellen Bedeutung Bindividuell, die der der Ortsangabe zugeordnete Ort selbst oder ein Ort in dessen unmittelbarer Nähe aufgrund mehrfachen Auswählens in der jüngeren Vergangenheit erlangen konnte, kann eine deutliche Priorisierung von Orten ansonsten geringer Verkehrsbedeutung erreicht werden (nicht dargestellt).

In einer weiteren Ausgestaltung der ersten beispielhaften Ausführungsform der Erfindung können die drei Parameter, von denen die navigatorische Relevanz einer Ortsangabe abhängig ist, also die Distanz D, die absolute Verkehrsbedeutung Babsolut und die individuelle Verkehrsbedeutung Bindividuell des der Ortsangabe zugeordneten Ortes auch individuell gewichtet werden. Die unterschiedlichen Gewichtungsfaktoren können sich beispielsweise additiv oder multiplikativ zu eins ergänzen.

In einer zweiten beispielhaften Ausführungsform wird die navigatorische Relevanz einer Ortsangabe folgendermaßen gebildet:

$$G_2 = \frac{1}{D} \cdot \left( B_{al\lg emein} + B_{individuell} \right).$$

Bei dieser Variante harmonisieren die allgemeine und die individuelle Verkehrsbedeutung noch besser miteinander, so dass Einträge von mittlerer allgemeiner Verkehrsbedeutung Ballgemein schon bei kleinerer individueller Verkehrsbedeutung Bindividuell als beste Treffer angeboten werden. Auch hier ist eine Gewichtung der drei Parameter wie oben angedeutet möglich. Die Gewichtung kann von einem Benutzer veränderbar sein.

Es ist zu verstehen, dass die oben ausgeführten, beispielhaft einzugebenden Ortsangaben lediglich illustrativer Form sind. Das Verfahren und System sind nicht auf die Verwendung der beispielhaften oder anderer Ortsnamen beschränkt. Die Erfindung ermöglicht es, eine Eingabe einer Ortsangabe in ein Navigationsgerät signifikant zu vereinfachen und eine Anzahl erforderlicher Bedienungsschritte durch einen Benutzer zu minimieren. Dabei ist das Verfahren intuitiv erfassbar, so dass eine Schulung des Benutzers bezüglich der vorgestellten Technik entbehrlich sein kann.

**Patentansprüche**

1.   Verfahren (200) zum Eingeben einer vorbestimmten Ortsangabe in ein Navigationsgerät (100), folgende Schritte umfassend:

- Erfassen (210) wenigstens eines eingegebenen Zeichens;
- Auswählen (220) wenigstens einer Ortsangabe aus einer Vielzahl von Ortsangaben auf der Basis der eingegebenen Zeichen;
- Darstellen (230) der ausgewählten Ortsangaben;
- Selektieren der vorbestimmten Ortsangabe unter den dargestellten Ortsangaben;

**dadurch gekennzeichnet, dass**

- das Auswählen (220) zusätzlich auf der Basis einer navigatorischen Relevanz der den Ortsangaben zugeordneten Orten erfolgt.

2.   Verfahren nach Anspruch 1, ferner umfassend den Schritt des Bestimmens der navigatorischen Relevanz einer Ortsangabe auf der Basis einer Verkehrsbedeutung eines der Ortsangabe zugeordneten Ortes.

3.   Verfahren nach einem der vorangehenden Ansprüche, ferner umfassend den Schritt des Bestimmens der navigatorischen Relevanz einer Ortsangabe auf der Basis einer Lage eines der Ortsangabe zugeordneten Ortes bezüglich einer aktuellen Position des Navigationsgeräts (100).

4. Verfahren nach einem der vorangehenden Ansprüche, ferner umfassend den Schritt des Bestimmens der navigatorischen Relevanz einer Ortsangabe auf der Basis einer vorausgehenden Verwendung der Ortsangabe durch das Navigationsgerät (100).

5. Verfahren nach dem vorangehenden Anspruch, wobei ein zeitlicher Verlauf einer Verwendungshäufigkeit der Ortsangabe berücksichtigt wird.

6. Verfahren nach Anspruch 4 oder 5, wobei eine Verwendungshäufigkeit einer ersten Ortsangabe das Berücksichtigen einer Verwendungshäufigkeit einer zweiten Ortsangabe beeinflusst, die mit der ersten Ortsangabe in einer vorbestimmten Beziehung steht.

7. Computerprogrammprodukt mit Programmcodemitteln zur Durchführung des Verfahrens eines der vorangehenden Ansprüche, wenn das Computerprogrammprodukt auf einer Verarbeitungseinheit, insbesondere einer Verarbeitungseinheit eines Navigationsgeräts, abläuft.

8. Navigationsgerät, umfassend:

   - Erfassungsmittel zur Erfassung wenigstens eines eingegebenen Zeichens;
   - Auswahlmittel zur Auswahl wenigstens einer Ortsangabe einer Vielzahl von Ortsangaben auf der Basis der eingegebenen Zeichen;
   - Darstellungsmittel zur Darstellung der ausgewählten Ortsangaben;
   - Selektierungsmittel zum Selektieren der vorbestimmten Ortsangabe unter den dargestellten Ortsangaben;

   **dadurch gekennzeichnet, dass**

   - die Auswahlmittel ausgebildet sind, zusätzlich auf der Basis einer navigatorischen Relevanz auswählen.

9. System, umfassend ein Kraftfahrzeug und ein an/in dem Kraftfahrzeug angebrachtes Navigationsgerät nach Anspruch 8.

100

120

110

140

150

160

130

**Fig. 1**

200

205

210

220

230

240

n

j

250

**Fig. 2**

**Nach 1. Buchstaben**

| W‍aabs | |
|---|---|
| Waabshof | |
| Waag | |
| Waake | |

## Fig. 3a

**Nach 2. Buchstaben**

| Wi‍arden | |
|---|---|
| Wiarden Altendeich | |
| Wiarden Busch | |
| Wiarden Hammerich | |

## Fig. 3b

**Nach 3. Buchstaben**

| Wie‍bche | |
|---|---|
| Wiebeke | |
| Wiebeler | |
| Wiebelhausen | |

## Fig. 3c

**Nach 4. Buchstaben**

| Wies _ | |
|---|---|
| Wies, Apfeldorf- | |
| Wies, Schmid's | |
| Wiesa | |

## Fig. 3d

**Nach 5. Buchstaben**

| Wiesb‍ach | |
|---|---|
| Wiesbaden | |
| Wiesbaum | |
| Wiesbichl | |

## Fig. 3e

**Nach 6. Buchstaben**

| Wiesba‍ch | |
|---|---|
| Wiesbaden | |
| Wiesbaum | |

## Fig. 3f

## Fig. 3

**Nach 7. Buchstaben**

| Wiesbad‍en | |
|---|---|
| | |

## Fig. 3g

**Nach 1. Buchstaben**

| Wismar | |
|---|---|
| Wismar - Klein | |
| Wispelt | |
| Wispenstein | |

## Fig. 4a

**Nach 2. Buchstaben**

| Wismar | |
|---|---|
| Wismar - Klein | |
| Wispelt | |
| Wispenstein | |

## Fig. 4b

**Nach 3. Buchstaben**

| Wiesbaden | |
|---|---|
| Wiesbaum | |
| Wiesbichl | |
| Wiesbühl | |

## Fig. 4c

## Fig. 4

**Nach 1. Buchstaben**

| Würzburg | |
|---|---|
| Würzburg; Gem... | |
| Würzburger Haus | |
| Würzelbrunn | |

## Fig. 5a

**Nach 2. Buchstaben**

| Wiesbaden | |
|---|---|
| Wiesbaum | |
| Wiesbichl | |
| Wiesbüll | |

## Fig. 5b

**Nach 3. Buchstaben**

| Wiesbaden | |
|---|---|
| Wiesbaum | |
| Wiesbichl | |
| Wiesbüll | |

## Fig. 5c

**Nach 4. Buchstaben**

| Wiesbaden | |
|---|---|
| Wiesbaum | |
| wiesbichl | |
| Wiesbüll | |

## Fig. 5d

**Nach 5. Buchstaben**

| Wiesenbronn | |
|---|---|
| Wiesenburg | |
| Wiesendorf | |
| Wieseneck | |

## Fig. 5e

## Fig. 5

EP 2 177 877 A1

Europäisches
Patentamt

European
Patent Office

Office européen
des brevets

**EUROPÄISCHER RECHERCHENBERICHT**

Nummer der Anmeldung

EP 09 16 8067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 058145 A1 (BAYERISCHE MOTOREN WERKE AG [DE]) 14. Juni 2007 (2007-06-14) * Absätze [0027] - [0035] * ----- | 1-9 | INV. G01C21/36 G08G1/0968 |
| X | DE 100 42 983 A1 (CAA AG [DE]) 28. März 2002 (2002-03-28) * Absätze [0020] - [0028], [0045] - [0048] * ----- | 1-5,7-9 | |
| X | DE 103 39 525 A1 (VOLKSWAGEN AG [DE]) 17. März 2005 (2005-03-17) * Absätze [0018] - [0023], [0028] * ----- | 1-4,7-9 | |
| X | DE 103 28 200 A1 (AUDI NSU AUTO UNION AG [DE]) 10. Februar 2005 (2005-02-10) * Absatz [0025] * ----- | 1-2,7-9 | |
| X | WO 01/90696 A1 (BOSCH GMBH ROBERT [DE]; EHRKE JENS [DE]) 29. November 2001 (2001-11-29) * Seite 3, Zeilen 8-27 * * Seite 8, Zeile 21 - Seite 10, Zeile 15 * ----- | 1-2,7-9 | RECHERCHIERTE SACHGEBIETE (IPC) G01C G08G |
| X | DE 102 05 017 A1 (BOSCH GMBH ROBERT [DE]) 21. August 2003 (2003-08-21) * Absätze [0014], [0015] * ----- | 1-2,4, 7-9 | |
| X | DE 100 12 441 A1 (BOSCH GMBH ROBERT [DE]) 11. Oktober 2001 (2001-10-11) * Absätze [0006], [0007], [0025] - [0029] * ----- | 1,3,7-9 | |

Der vorliegende Recherchenbericht wurde für alle Patentansprüche erstellt

| Recherchenort | Abschlußdatum der Recherche | Prüfer |
|---|---|---|
| Den Haag | 18. Januar 2010 | Bruinsma, Maarten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes
    Dokument

EPO FORM 1503 03.82 (P04C03)

9

# EP 2 177 877 A1

**ANHANG ZUM EUROPÄISCHEN RECHERCHENBERICHT
ÜBER DIE EUROPÄISCHE PATENTANMELDUNG NR.**

EP 09 16 8067

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2010

| Im Recherchenbericht angeführtes Patentdokument | Datum der Veröffentlichung | Mitglied(er) der Patentfamilie | Datum der Veröffentlichung |
|---|---|---|---|
| DE 102005058145 A1 | 14-06-2007 | KEINE | |
| DE 10042983 A1 | 28-03-2002 | KEINE | |
| DE 10339525 A1 | 17-03-2005 | KEINE | |
| DE 10328200 A1 | 10-02-2005 | KEINE | |
| WO 0190696 A1 | 29-11-2001 | DE 10025042 A1<br>EP 1290409 A1<br>US 2002152080 A1 | 31-01-2002<br>12-03-2003<br>17-10-2002 |
| DE 10205017 A1 | 21-08-2003 | AT 431545 T<br>WO 03067193 A1<br>EP 1474656 A1<br>ES 2324289 T3 | 15-05-2009<br>14-08-2003<br>10-11-2004<br>04-08-2009 |
| DE 10012441 A1 | 11-10-2001 | WO 0169178 A1<br>EP 1269119 A1<br>US 2004010365 A1 | 20-09-2001<br>02-01-2003<br>15-01-2004 |

EPO FORM P0461

Für nähere Einzelheiten zu diesem Anhang : siehe Amtsblatt des Europäischen Patentamts, Nr.12/82